# FASCICULE DE BREVET EUROPEEN

(11) **EP 2 630 765 B1**
(45) Date de publication et mention de la délivrance du brevet: **29.04.2015**
(21) Numéro de dépôt: 11773714.8
(22) Date de dépôt: 18.10.2011
(51) Int. Cl.: H04L 29/06

(54) **PROCEDE D'OPTIMISATION DU TRANSFERT DE FLUX DE DONNEES SECURISES VIA UN RESEAU AUTONOMIQUE**
VERFAHREN ZUR OPTIMIERUNG DER ÜBERTRAGUNG EINES SICHEREN DATENSTROMS ÜBER EIN AUTONOMES NETZWERK
METHOD FOR OPTIMIZING THE TRANSFER OF A STREAM OF SECURE DATA VIA AN AUTONOMIC NETWORK

(30) Priorité: 21.10.2010 FR 1058621
(43) Date de publication de la demande: 28.08.2013
(73) Titulaire: Ipanema Technologies, 92260 Fontenay aux Roses (FR)
(72) Inventeur: DELATTRE, Michel, F-92100 Boulogne Billancourt (FR); PROVOST, Jacques, F-91600 Savigny-sur-Orge (FR)
(74) Mandataire: Ilgart, Jean-Christophe
(86) Numéro de dépôt international: PCT/EP2011/068185
(87) Numéro de publication internationale: WO 2012/052434

(56) Documents cités:
- US-A1- 2009 178 109
- DIJIANG HUANG ET AL: "MobiCloud: Building Secure Cloud Framework for Mobile Computing and Communication", SERVICE ORIENTED SYSTEM ENGINEERING (SOSE), 2010 FIFTH IEEE INTERNATIONAL SYMPOSIUM ON, IEEE, PISCATAWAY, NJ, USA, 4 juin 2010 (2010-06-04), pages 27-34, XP031752198, ISBN: 978-1-4244-7327-4

## Description

### DOMAINE TECHNIQUE

L'invention se situe dans le domaine des télécommunications et concerne plus spécifiquement un procédé d'optimisation du transfert de flux de données sécurisés via un réseau autonomique entre une pluralité d'usagers Pi Producteurs d'informations et une pluralité d'usagers Cj Consommateurs d'informations comportant chacun au moins un client et/ou au moins un serveur, ledit réseau autonomique comportant au moins un élément central chargé de distribuer des consignes d'optimisation du transfert de flux de données, au moins un module d'observation chargé de mesurer les caractéristiques des flux à transférer, et au moins un module d'optimisation chargé d'appliquer les consignes d'optimisation du transfert distribuées par l'élément central en prenant en considération les mesures obtenues par le module d'observation, les clients et les serveurs étant configurés pour échanger des paramètres d'authentification mutuelle et des paramètres de sécurisation des flux échangés entre les usagers Pi Producteurs d'informations et les usagers Cj Consommateurs d'informations et pour appliquer un contrôle de l'intégrité des échanges et une protection de la confidentialité selon lesdits paramètres de sécurisation et selon lesdits paramètres d'authentification.

L'invention concerne également un dispositif destiné à mettre en oeuvre le procédé selon l'invention.

L'invention concerne aussi un programme d'ordinateur mémorisé sur un support, comportant des instructions pour mettre en oeuvre le procédé selon l'invention lorsqu'il est exécuté par un ordinateur.

### ÉTAT DE LA TECHNIQUE ANTÉRIEURE

Avec les dernières évolutions des réseaux de télécommunications, les serveurs ne sont plus localisés dans des périmètres bien identifiés de l'Entreprise ou du groupe d'Usagers, mais sont répartis autour d'un réseau étendu WAN (pour Wide area network). De ce fait, les dispositifs de sécurité qui assurent l'authentification des fonctions participantes aux échanges de flux d'information, l'intégrité de ces flux et la confidentialité de ces flux ne peuvent plus se baser uniquement sur des principes de protection de périmètre. L'usurpation d'identité qui est l'une des principales menaces de cette dématérialisation, permet de commettre des actions frauduleuses ou d'accéder à des droits de façon indue. L'une des techniques d'usurpations d'identité les plus répandues est l'hameçonnage (phishing) qui consiste à faire croire à un consommateur ou à un producteur d'informations qu'il s'adresse à un tiers de confiance.

Il est par conséquent indispensable de garantir l'intégrité des flux d'informations échangés et l'authenticité des participants à ces échanges.

Un autre problème technique inhérent aux réseaux WAN provient du fait que leurs caractéristiques distordent notablement les flux et provoquent une forte perte de qualité d'Expérience des applications en réseau.

Il est par conséquent nécessaire d'introduire dans la chaîne de confiance des dispositifs d'optimisation des flux sans pour autant s'exposer aux menaces d'usurpation.

IPsec (Internet Protocol Security), défini par l'IETF, est un ensemble de protocoles utilisant des algorithmes permettant le transport de données sécurisées sur un réseau IP. Selon ces protocoles, avant qu'une transmission IPsec ne puisse être réalisée, des mécanismes d'authentification des deux extrémités d'un tunnel sécurisé doivent être implémentés. Ces mécanismes s'inscrivent dans une architecture de sécurité très statique adaptée aux infrastructures de base pour réaliser le masquage de flux avec un haut degré de confidentialité. Ceci nécessite une planification d'associations de sécurité et un câblage logique au dessus d'un réseau ouvert en mode paquet. Les dispositifs d'optimisation sont alors placés en amont de ce câblage logique et font partie intégrante de la zone de confiance dans laquelle les applications sont déployées. Une coordination de ces dispositifs, soit par des règles, soit par des mécanismes autonomiques, reste possible au sein de la zone. Cette coordination permet de mettre en commun des capacités d'optimisation comme, par exemple, des dictionnaires d'information redondantes. Cette mise en commun augmente considérablement l'efficacité de ces dispositifs.

Cependant, la flexibilité, le nomadisme, la continuité de service dans les cas de pannes ou de crises conduisent à relâcher le câblage logique au dessus du réseau. Parallèlement, la menace grandissante d'éléments corrompus au sein du réseau sécurisé nécessite un contrôle d'accès plus fin. Cela conduit à la généralisation de protocoles en mode Client-Serveur créant dynamiquement des tunnels sécurisés généralement réduits au transport d'un flux applicatif. Ainsi, le protocole TLS (pour Transport Layer Security) de sécurisation des échanges sur Internet, anciennement nommé Secure Sockets Layer (SSL), et ses extensions comme DTLS dédié au datagramme UDP, s'appuient sur les certificats numériques permettant l'authentification du serveur et même l'authentification forte du client. Les dispositifs d'optimisation sont alors réduits à des fonctions intégrées aux applications et il devient difficile de coordonner les multiples applications et les multiples Usagers sollicitant le réseau WAN. L'efficacité atteinte avec les dispositifs d'optimisation disséminés dans le réseau WAN ou à ces accès est alors perdue.

Le protocole TLS a largement été adopté dans les dispositifs d'optimisation applicative placés dans les périmètres des centres de traitement des données (Data Center en anglais). Ce succès a nécessité une recherche de solutions pour accélérer les traitements cryptographiques (SSL offload). Des dispositifs séparés des serveurs ont été introduits et dédiés aux traitements SSL. Leur centralisation et co-localisation avec les serveurs d'application a rendu possible une simple duplication des certificats numériques à la base de l'authentification. Ces certificats sont signés par une Autorité de Certification qui atteste la validité de l'association clé publique-identité du serveur. Des procédures telles que celle conçues par les laboratoires RSA (PKCS Public Key Cryptographic Standards) sont largement adoptées. De manière générale, avant d'émettre une requête de certification vers l'Autorité de Certification, il y a production d'une paire clé publique-clé privée et protection de la clé privée. L'administration commune des serveurs et des dispositifs d'optimisation permet pour un même certificat signé d'avoir plusieurs équipements où la clé privée associée est installée. Une première génération de dispositifs d'optimisation applicative a hérité de ces principes d'autant qu'elle utilisait des principes d'optimisation en un point.

Cependant, l'efficacité maximale d'une optimisation n'est atteignable qu'en déployant des dispositifs aux deux extrémités d'un tunnel sécurisé.

Le document US 2007/0074282 « Distributed SSL processing » décrit un procédé pour terminer une session SSL au niveau d'un premier dispositif d'optimisation placé au plus prés du client tout en laissant un gestionnaire de certificat SSL au niveau du centre de traitement des données. Ces dispositifs d'optimisation font partie d'une infrastructure sécurisée où les flux optimisés peuvent être échangés sans crainte de détournement.

Cependant, ce procédé s'inscrit dans une architecture où les dispositifs d'optimisation font partie du câblage logique de l'Entreprise et ne convient plus aux nouveaux défis de flexibilité, de nomadisme, de continuité de service, de menaces grandissantes d'éléments corrompus en amont du réseau WAN et de schémas multi-parties mêlant responsabilités d'opérateurs de télécommunication, fournisseurs de services et d'organisations des entreprises.

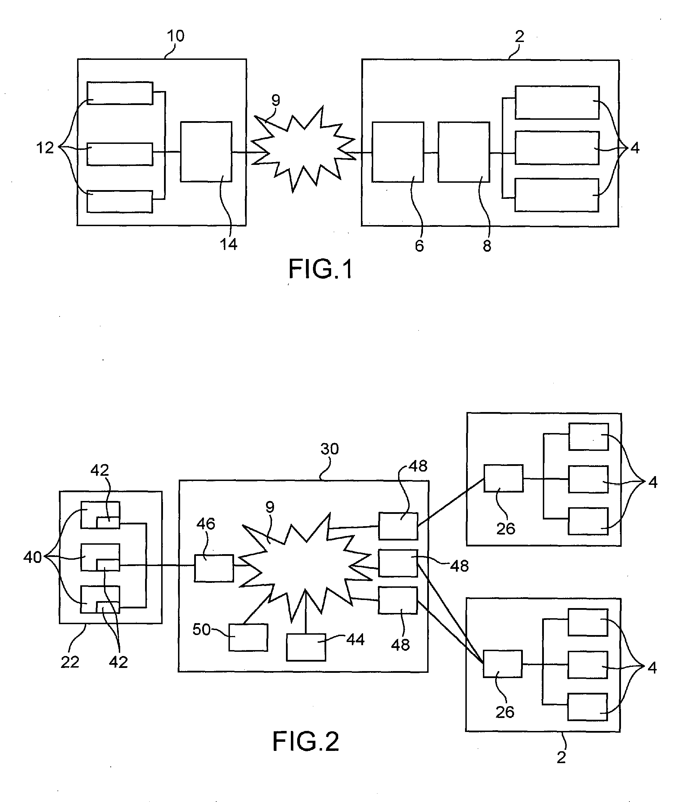

La figure 1 illustre schématiquement une architecture client-serveur mettant en oeuvre une procédure de sécurisation de l'art antérieur.

Cette architecture comporte un centre de traitement de données 2 hébergeant plusieurs serveurs d'applications 4, un premier module d'accélération des traitements 6, et un module de sécurisation des échanges 8. Le centre de traitement de données 2 est relié via un réseau WAN 9 à un local distant 10 comportant plusieurs clients 12 et un deuxième module d'accélération des traitements 14.

Le premier module d'accélération des traitements 6 et le module de sécurisation des échanges 8 collaborent sous une administration commune. Le module de sécurisation des échanges 8 détient les clés privées nécessaires à l'authentification des serveurs 4. Il communique au module d'accélération des traitements 6 les éléments cryptographiques liés à une session temporaire Client-Serveur permettant de déchiffrer les flux. Le module d'accélération des traitements 6 communique à son tour ces éléments cryptographiques au centre de traitement de données 2 afin de déchiffrer les flux d'une session et de les optimiser avant de les chiffrer à nouveau.

Dans cette architecture, les modules 4, 6, et 8 sont dans le périmètre sécurisé 2 du centre de traitement des données 2 et sont administrés de façon centralisée.

Le document US2009178109, 9 Juillet 2009, présente une méthode de gestion de contenu sécurisé. Les serveurs et les dispositifs d'optimisation sont associés dans le périmètre de confiance du fournisseur de services.

En résumé, les techniques de l'art antérieur nécessitent :
- soit d'associer les serveurs et les dispositifs d'optimisation dans le périmètre de confiance du fournisseur de services et de placer des dispositifs d'optimisation compatibles au plus près des clients,
- soit d'autoriser les dispositifs d'optimisation d'un périmètre centre de traitement des données de l'Entreprise à se faire passer auprès des Clients de l'Entreprise pour les serveurs du "Cloud Computing".

Cependant, dès lors qu'il y a plusieurs fournisseurs de service, le fait d'introduire sur les sites Clients des dispositifs d'optimisation compatibles avec ceux des fournisseurs de services posent des difficultés de mise en oeuvre qui sont de même nature que celles rencontrées dans l'implication de services sécurisés au sein des plateformes mobiles (téléphone mobile, smartphone). Une solution proposée dans ce cadre consiste à cloisonner sur une même plateforme matérielle des environnements de différents fournisseurs de services. Cette solution nécessite une standardisation poussée de ces plateformes et de leur architecture de sécurité avec une implication forte des opérateurs mobiles. Un élément clé de ces architectures est la carte SIM qui est l'élément de confiance reconnu par tous. Cela nécessite aussi une certaine standardisation des échanges entre dispositifs d'optimisation afin de ne pas pénaliser les dispositifs des sites Clients.

Par ailleurs, le fait d'autoriser les dispositifs du centre de traitement des données à se faire passer pour les serveurs du "Cloud Computing" réduit considérablement l'intérêt du "Cloud Computing" pour les clients nomades car les échanges sont contraints à passer par des points de passage obligés qui ne sont pas nécessairement sur des chemins optimums.

Une alternative serait que les centres de traitement des données soient dans le périmètre d'un opérateur de télécommunication opérant à la fois les dispositifs d'optimisation des sites Clients et Datacenter et ayant des accords avec les fournisseurs de services.

Dans les deux cas, les opérations liées à la mise en place d'une procédure d'authentification fiable se trouvent largement complexifiées du fait des multiples acteurs.

Un but de l'invention est de pallier les insuffisances de l'art antérieur décrit ci-dessus.

Un autre but de l'invention est de permettre le déploiement de services sécurisés de type "Cloud Computing" en laissant la procédure d'authentification inchangée entre le Client et le Serveur.

### EXPOSÉ DE L'INVENTION

L'invention préconise alors un procédé d'optimisation du transfert de flux de données sécurisés via un réseau autonomique entre une pluralité d'usagers Pi Producteurs d'informations et une pluralité d'usagers Cj Consommateurs d'informations comportant chacun au moins un client et/ou au moins un serveur, dans lequel ledit réseau autonomique comporte au moins un élément central chargé de distribuer des consignes d'optimisation dudit transfert, au moins un module d'observation chargé de mesurer les caractéristiques des flux à transférer, et au moins un module d'optimisation chargés d'appliquer lesdites consignes d'optimisation en prenant en considération les mesures obtenues par le module d'observation, et dans lequel, les clients et les serveurs sont configurés pour échanger des paramètres d'authentification mutuelle et des paramètres de sécurité des flux échangés entre les usagers Pi Producteurs d'informations et les usagers Cj Consommateurs d'informations, et pour appliquer à la suite de cette négociation un contrôle de l'intégrité des flux transférés et une protection de la confidentialité selon lesdits paramètres de sécurité négociés.

Le procédé selon l'invention comporte les étapes suivantes:
pour chaque session sécurisée entre un usager Pi Producteur d'informations et un usager Cj Consommateur d'informations :
   a) détecter au moyen d'un module d'optimisation situé géographiquement au plus prés d'un serveur l'initialisation d'une session sécurisée entre un client et un serveur,
   b) temporiser la négociation entre le client et le serveur au niveau dudit module d'optimisation,
   c) établir pendant ladite temporisation un canal de contrôle sécurisé entre ledit module d'optimisation et un agent autonomique associé au client,
   d) échanger entre ledit module d'optimisation et ledit agent autonomique via ledit canal de contrôle sécurisé des paramètres de sécurité non rémanents,
   e) appliquer entre l'agent autonomique et le module d'optimisation une procédure de sécurisation utilisant lesdits paramètres de sécurité non rémanents, de sorte que lors d'un échange de flux entre l'usager Pi Producteur d'informations et l'usager Cj Consommateur d'informations, le module d'optimisation disposant des paramètres de sécurité non rémanents apparaisse comme le client pour le serveur au cours de ladite session.

Selon une caractéristique de l'invention, un client peut être est un mandataire (en anglais proxy) agissant pour le compte d'un ensemble de Clients.

Préférentiellement, lesdits clients communiquent directement avec le coeur du réseau autonomique via un canal de commande dédié.

Dans une mise en oeuvre particulière du procédé selon l'invention, l'authentification mutuelle entre le client et le serveur est réalisée par la méthode Internet Key Exchange (IKE) lorsque les flux sont sécurisés par les protocoles IPsec, ou par la méthode d'échange de certificats numériques lorsque les flux sont sécurisés par les protocoles de type Secure Sockets Layer (SSL) ou Transport Layer Security (TLS).

Le procédé selon l'invention est mis en oeuvre par un dispositif d'optimisation du transfert de flux de données sécurisés échangés via un réseau autonomique entre une pluralité d'usagers Pi Producteurs d'informations et une pluralité d'usagers Cj Consommateurs d'informations comportant chacun au moins un client et/ou au moins un serveur configuré pour négocier des paramètres d'authentification mutuelle et des paramètres de sécurisation des flux échangés entre les usagers Pi Producteurs d'informations et les usagers Cj Consommateurs d'informations, et pour appliquer, suite à cette négociation, un contrôle de l'intégrité des échanges et une protection de la confidentialité des paramètres d'authentification mutuelle et desdits paramètres de sécurisation des flux, ledit réseau autonomique comportant au moins un élément central chargé de distribuer des consignes d'optimisation dudit transfert, au moins un module d'observation chargé de mesurer les caractéristiques des flux à optimiser, et au moins un module d'optimisation chargé d'appliquer lesdites consignes d'optimisation en prenant en considération les mesures obtenues par le module d'observation.

Selon l'invention, ledit module d'optimisation comporte des moyens pour détecter l'initialisation d'une session sécurisée entre le client et le serveur, des moyens pour temporiser la négociation entre le client et le serveur, des moyens pour établir pendant ladite temporisation un canal de contrôle sécurisé avec un agent autonomique intégré au client pour échanger entre ledit module d'optimisation et ledit agent autonomique des paramètres de sécurité non rémanents, des moyens pour appliquer entre l'agent autonomique et le module d'optimisation une procédure de sécurisation utilisant lesdits paramètres de sécurité non rémanents, de sorte que lors d'un échange de flux entre l'usager Pi Producteur d'informations et l'usager Cj Consommateur d'informations, le module d'optimisation disposant des paramètres de sécurité non rémanents apparaisse comme le client pour le serveur au cours de ladite session.

### BRÈVE DESCRIPTION DES DESSINS

D'autres caractéristiques et avantages de l'invention ressortiront de la description qui va suivre, prise à titre d'exemple non limitatif, en référence aux figures annexées dans lesquelles :
- la figure 1, décrite précédemment, illustre schématiquement une architecture client-serveur mettant en oeuvre une procédure de sécurisation de l'art antérieur;
- la figure 2 illustre schématiquement une architecture client-serveur mettant en oeuvre une procédure de sécurisation selon l'invention dans un réseau autonomique,
- la figure 3 illustre schématiquement un exemple de client embarquant un agent autonomique mettant en oeuvre une procédure de sécurisation selon l'invention ;
- la figure 4 illustre les échanges entre un client, un module d'optimisation et un serveur dans un premier mode de mise en oeuvre du procédé selon l'invention,
- la figure 5 illustre les échanges entre un client, un module d'optimisation et un serveur dans un deuxième mode de mise en oeuvre du procédé selon l'invention.

### EXPOSÉ DÉTAILLÉ DE MODES DE RÉALISATION PARTICULIERS

L'invention sera décrite en référence aux figures 2 à 5 dans lesquelles des références identiques désignent les éléments remplissant des fonctions identiques.

La figure 2 illustre schématiquement une architecture client-serveur comportant une première zone sécurisée 20, hébergeant des serveurs d'applications 4 et un module d'accélération des traitements 6. La première zone sécurisée 20 est reliée via un réseau au autonomique 30 à une deuxième zone sécurisée 22 telle que par exemple une entreprise ou une administration comportant des clients 40 embarquant chacun un agent autonomique 42.

Le réseau autonomique 30 comporte un élément central 44 chargé de distribuer des consignes d'optimisation du transfert d'information entre la première zone sécurisée 20 et la deuxième zone sécurisée 22, un module d'observation 46 chargé de mesurer les caractéristiques des flux à transférer, un module d'optimisation 48 chargé d'appliquer lesdites consignes d'optimisation en prenant en considération les mesures obtenues par le module d'observation 46, et d'un module de coordination 50 destiné à appliquer des consignes dictées par l'élément central 44 visant à autoriser ou à interdire le transfert des paramètres de sécurisation et des paramètres d'authentification préalablement négociés entre les clients 40 et les serveurs d'applications 4.

En fonctionnement, lorsqu'une session sécurisée est initiée entre l'un des agents autonomiques 42 et l'un des serveurs 4, le début de cette session est automatiquement détecté par l'un des modules d'optimisation 48. Ce dernier propose ses services à l'agent autonomique 42, qui avait échangé des données d'identification avec le module de coordination 50 afin de se faire connaître du réseau 30. A titre d'exemple, cette détection se fait sur reconnaissance du message HELLO SERVER du protocole SSL émis par le client à destination du serveur et de l'adresse IP du client faisant partie des données d'identification préalablement fournies par l'agent autonomique 42 au coeur du réseau autonomique, et qui est connue du module d'optimisation 48. Le module d'optimisation 48 temporise la négociation entre le client 40 et le serveur 4 et établit, pendant la période de temporisation, un canal de communication sécurisé avec l'agent autonomique 42. Par ce canal de communication sécurisé, le module d'optimisation 48 propose à l'agent autonomique 42 d'optimiser le transfert du flux sécurisé et de s'insérer dans la chaîne de confiance selon différentes méthodes.

Une première méthode consiste à laisser le client 40 poursuivre la négociation des paramètres de sécurité avec le serveur d'applications 4 et de collecter par le canal de communication sécurisé les paramètres de sécurité négociés afin de pouvoir traiter le flux sécurisé entre le client 40 et le serveur 4 et de manière transparente pour le serveur 4.

Une autre méthode consiste à modifier depuis le module d'optimisation 48 les échanges de négociation entre le client 40 et le serveur 4 et à générer dynamiquement des paramètres d'authentification à destination du client 40. Le module d'optimisation 48 se fait alors passer le temps de la session sécurisée pour le serveur 4 auprès du client 40 et pour le client 40 auprès du serveur 4.

La procédure de sécurisation négociée est alors appliquée entre l'agent autonomique 42 et le module d'optimisation 48 de sorte que lors d'un échange de flux entre le client 40 et le serveur 4, le module d'optimisation 48 apparaisse comme le client 40 pour le serveur 4 au cours de ladite session.

A titre d'exemple, la procédure de sécurisation consiste à appliquer les traitements SSL tels que:
- Numéroter et signer chaque paquet d'informations émis depuis le client 40 et optimisé par l'agent autonomique,
- Chiffrer avec l'algorithme négocié et selon les paramètres négociés de configuration de cet algorithme le contenu des paquets d'information émis depuis le client 40,
- Déchiffrer avec l'algorithme négocié le contenu des paquets d'information interceptés par le module d'optimisation 48,
- Renuméroter et signer chaque paquet d'informations réémis depuis le module d'optimisation 48 à destination du serveur 4 selon les mêmes méthodes employées par le client 40,
- Chiffrer avec le même algorithme négocié et selon les mêmes paramètres négociés de configuration de cet algorithme le contenu des paquets d'information réémis depuis le module d'optimisation 48 à destination du serveur 4,
- Traiter les paquets d'information reçus au serveur 4 comme s'ils venaient directement du client 40.

Notons que dans un mode préféré de mise en oeuvre du procédé selon l'invention, le transfert de l'agent autonomique 42 vers le module d'optimisation 48 des paramètres de sécurité négociés entre le client 40 et le serveur 4 est soumis à une autorisation du module de coordination 50 qui est configuré pour appliquer des consignes dictées par l'élément central 44.

Dans un deuxième mode de mise en oeuvre du procédé selon l'invention, ledit transfert est soumis à des règles définies par l'administrateur du client 40 qui consistent, soit à ne pas optimiser certains flux particuliers, soit à consigner dans un journal la session sécurisée qui fait l'objet d'une optimisation, ou encore à notifier une alerte à l'usager du client 40 lui signifiant que la session sécurisée qu'il utilise fait l'objet d'une optimisation. L'administrateur du client 40 est par exemple le responsable informatique d'une Entreprise. Cette Entreprise peut s'appuyer sur les services d'un Opérateur de télécommunications pour transférer de manière optimale ses flux entre ses Usagers, et entre ses Usagers et des serveurs d'un fournisseur de services. Des exemples connus de fournisseurs de service pour les entreprises sont GOOGLE APPS® et MICROSOFT BPOS® (Business Productivity On line Suite. Une relation de confiance lie l'Entreprise et le fournisseur de service, et cette relation est fondée sur l'authentification mutuelle des serveurs du fournisseur de service et des Usagers de l'Entreprise. Une autre relation de confiance lie l'Entreprise et l'Opérateur de télécommunication et est fondée sur un contrat de service. L'optimisation du transfert des flux sécurisés nécessite d'insérer flux par flux dans la chaîne de confiance Usagers de l'Entreprise - Fournisseurs de service des éléments administrés par l'Opérateur de télécommunications. Ledit transfert est donc soumis à des règles permettant d'assurer un haut degré de confiance et de donner les moyens de vérification.

Les modules de coordination 50 sont en outre configurés pour organiser un transfert des fonctions d'optimisation entre deux modules d'optimisation 48 distincts lors d'un changement de route des flux sécurisés.

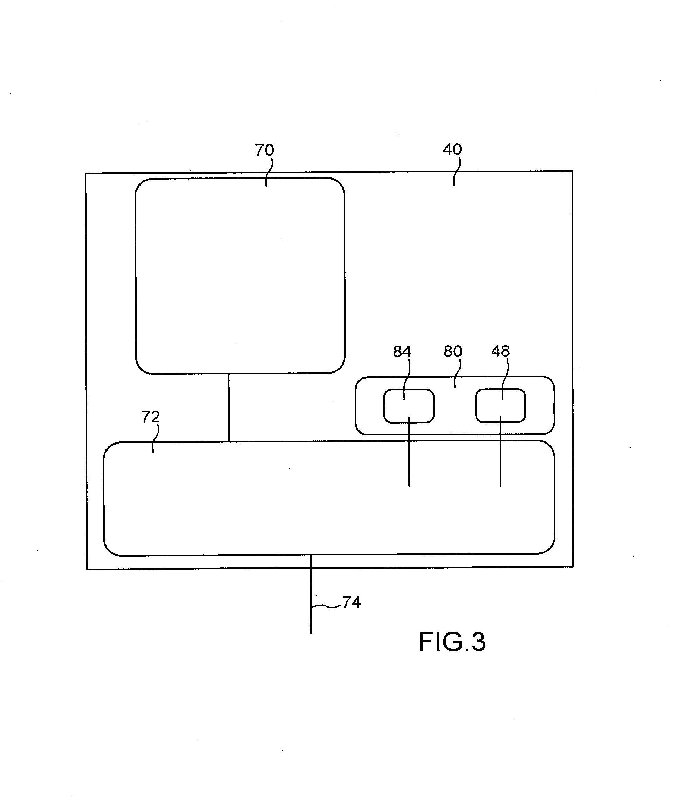

La figure 3 représente un exemple de client 40 composé d'applications 70 et d'un système d'exploitation 72 et relié au réseau via une interface réseau 74. Ce client 40 comporte un agent autonomique 80 comportant un module d'optimisation 48 et un module cryptographique 84.

Le module cryptographique 84 peut à titre d'exemple se comporter vis-à-vis du système d'exploitation 72 comme une carte à puce (Smart Card) ou une carte d'accélération SSL. De ce fait, il accède aux éléments de cryptographie des sessions sans pour autant détenir les clés privés des certificats numériques et les certificats des autorités de certification.

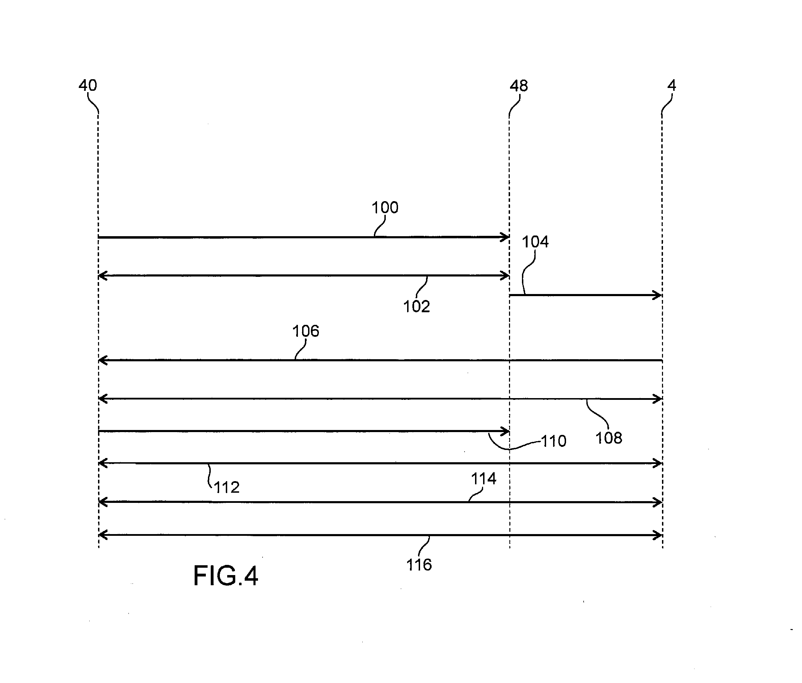

La figure 4 illustre un premier mode de mise en oeuvre du procédé selon l'invention dans lequel chaque paquet d'informations réémis depuis le module d'optimisation 48 à destination du serveur 4 est renuméroté et signé selon les mêmes méthodes employées par le client 40.

En référence à la figure 4, à l'étape 100, un client 40 transmet à un serveur 4 un message HELLO SERVER du protocole SSL. Ce message est intercepté par un module d'optimisation 48 au plus près du serveur. Lors du traitement de ce message par le module d'optimisation 48, une procédure de prise de contact (Autonomic Control Handshake) est initiée entre le client 40 et le module d'optimisation 48 via un canal sécurisé (étape 102).

A l'étape 104, le module d'optimisation 48 transmet le message HELLO SERVER intercepté au serveur 4.

A l'étape 106, le serveur 4 renvoie au client 40 un message HELLO SERVER comportant le certificat d'authentification du serveur 4.

A l'étape 108, une procédure de négociation de paramètre de sécurité est initiée entre le client 40 et le serveur 4.

A l'étape 110, le client 40 transmet au module d'optimisation 48 les paramètres de sécurité négociés à l'étape 108 avec le serveur 4.

A l'étape 112, le client 40 et le serveur 4 échangent une signalisation de fin de la procédure de négociation SSL.

A l'étape 114, le client 40 et le serveur 4 échangent des données qui sont traitées à la volée par le module d'optimisation 48 disposant des paramètres de sécurité de la session reçus l'étape 110.

Lorsque la totalité des données est échangée, le client 40 et le serveur 4 échangent une signalisation de fin de la communication à l'étape 116.

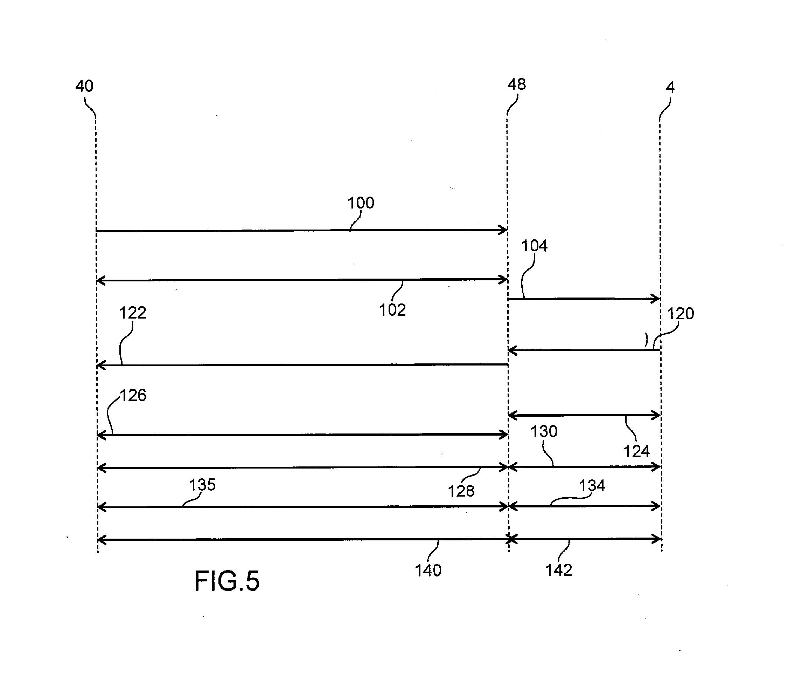

La figure 5 illustre un deuxième mode de mise en oeuvre du procédé selon l'invention dans lequel le contenu des paquets d'information réémis depuis le module d'optimisation 48 à destination du serveur 4 est chiffré avec l'algorithme et selon les paramètres de configuration de cet algorithme négociés entre le module d'optimisation 48 qui se fait passer pour le client 40 et le server 4.

Dans ce mode de mise en oeuvre, les étapes 100, 102 et 104 sont identiques à celle de la figure 4.

A l'étape 120, le serveur 4 renvoie au module d'optimisation 48 un message HELLO SERVER comportant le certificat d'authentification du serveur 4.

A l'étape 122, le module d'optimisation 48 transmet un message HELLO SERVER au client 40 en utilisant les données du certificat d'authentification du serveur et des données d'initialisation acquis lors de la prise de contact de l'étape 102.

A l'étape 124, une procédure de négociation de paramètre de sécurité est initiée entre le module d'optimisation 48 qui se fait passer pour le client 40 et le serveur 4.

A l'étape 126, une procédure de négociation de paramètre de sécurité est initiée entre le client 40 et le module d'optimisation 48 qui se fait passer pour le serveur 4 conformément à la prise de contact de l'étape 102.

A l'étape 128, le client 40 et le module d'optimisation 48 échangent une signalisation de fin de la procédure de prise de contact.

A l'étape 130, le serveur 4 et le module d'optimisation 48 échangent une signalisation de fin de la procédure de prise de contact.

A l'étape 132, le client 40 et le module d'optimisation 48 échangent des données.

A l'étape 134, le module d'optimisation 48 et le serveur 4 échangent lesdites données.

Lorsque la totalité des données est échangée, le client 40 et le module d'optimisation 48 échangent une signalisation de fin de la communication à l'étape 140.

De même, à l'étape 142 le module d'optimisation 48 échange une signalisation de fin de la communication avec le serveur 4.

A titre d'exemple, le module d'optimisation 48 peut être un fournisseur de service cryptographique qui s'insère dans l'architecture de sécurité du Client 40 et dont l'action est strictement définie par l'administrateur Client 40.

Le procédé selon l'invention s'applique pour optimiser des flux de données sécurisés générés par des applications de communication multimédia telles que la téléphonie, la visiophonie, la vidéoconférence, ou des applications de distribution multimédia telles que la vidéo à la demande, les diffusions, les syndications de contenu, ou des applications de consultation telles que les annuaires, les services interactifs, ou encore des applications de partage d'information telles que les échanges Peer-to-Peer, les bases de données réparties, ou des applications informatiques dont les éléments s'exécutent sur des machines éloignées et se synchronisent pour échanger de l'information à travers le réseau autonomique.

## Revendications

1. Procédé d'optimisation du transfert de flux de données sécurisés via un réseau autonomique (30) entre une pluralité d'usagers Pi Producteurs d'informations et une pluralité d'usagers Cj Consommateurs d'informations comportant chacun au moins un client (40) et/ou au moins un serveur (4), procédé dans lequel ledit réseau autonomique comporte au moins un élément central (44) chargé de distribuer des consignes d'optimisation dudit transfert, au moins un module d'observation (46) chargé de mesurer les caractéristiques des flux à transférer, et au moins un module d'optimisation (48) chargés d'appliquer lesdites consignes d'optimisation en prenant en considération les mesures obtenues par le module d'observation (46), et dans lequel, les clients (40) et les serveurs (4) sont configurés pour échanger des paramètres d'authentification mutuelle et des paramètres de sécurisation des flux échangés entre les usagers Pi Producteurs d'informations et les usagers Cj Consommateurs d'informations, et pour appliquer à la suite de cette négociation un contrôle de l'intégrité des flux transférés et une protection de la confidentialité selon lesdits paramètres de sécurisation et selon lesdits paramètres d'authentification,
procédé **caractérisé en ce qu'**il comporte les étapes suivantes:
pour chaque session sécurisée entre un usager Pi Producteur d'informations et un usager Cj Consommateur d'informations :
a) détecter au moyen d'un module d'optimisation (48) situé géographiquement au plus prés d'un serveur (4) l'initialisation d'une session sécurisée entre un client (40) et un serveur (4),
b) temporiser la négociation entre le client (40) et le serveur (4) au niveau dudit module d'optimisation (48),
c) établir pendant ladite temporisation un canal de contrôle sécurisé entre ledit module d'optimisation (48) et un agent autonomique (42) associé au client (40),
d) échanger entre ledit module d'optimisation (48) et ledit agent autonomique (42) via ledit canal de contrôle sécurisé des paramètres de sécurité non rémanents,
e) appliquer entre l'agent autonomique (42) et le module d'optimisation (48) une procédure de sécurisation initialisée par lesdits paramètres de sécurité non rémanents, de sorte que lors d'un échange de flux entre l'usager Pi Producteur d'informations et l'usager Cj Consommateur d'informations, le module d'optimisation disposant des paramètres de sécurité non rémanents apparaisse comme le client pour le serveur au cours de ladite session.

2. Procédé selon la revendication 1 dans lequel, le transfert de l'agent autonomique (42) vers le module d'optimisation (48) des paramètres de sécurisation et des paramètres d'authentification négociés entre le client (40) et le serveur (4) est soumis à une autorisation d'un module de coordination (50) destiné à appliquer des consignes dictées par l'élément central (44) visant à autoriser ou à interdire ledit transfert.

3. Procédé selon la revendication 1 dans lequel, le transfert de l'agent autonomique (42) vers le module d'optimisation (48) des paramètres de sécurisation et des paramètres d'authentification négociés entre le client (40) et le serveur (4) est soumis à au moins une règle préalablement définie par l'administrateur du client (40).

4. Procédé selon la revendication 3 dans lequel, ladite règle consiste, soit à ne pas optimiser certains flux particuliers, soit à consigner la session sécurisée qui fait l'objet d'une optimisation dans un journal, ou à notifier une alerte à l'usager du client (40) lui signifiant que la session sécurisée qu'il utilise fait l'objet d'une optimisation.

5. Procédé selon la revendication 2 dans lequel, ledit module de coordination (50) organise en outre un transfert des fonctions d'optimisation entre deux modules d'optimisation (48) distincts lors d'un changement de route des flux sécurisés.

6. Procédé selon la revendication 1 dans lequel, le client (4) communique directement avec le coeur du réseau autonomique via un canal de commande dédié.

7. Procédé selon la revendication 1 dans lequel, les flux de données sécurisés échangés entre un usager Pi Producteur d'informations et un usager Cj Consommateur d'informations sont générés par des applications de communication multimédia telles que la téléphonie, la visiophonie, la vidéoconférence, ou des applications de distribution multimédia telles que la vidéo à la demande, les diffusions, les syndications de contenu, ou des applications de consultation telles que les annuaires, les services interactifs, ou encore des applications de partage d'information telles que les échanges Peer-to-Peer, les bases de données réparties, ou des applications informatiques dont les éléments s'exécutent sur des machines éloignées et se synchronisent pour échanger de l'information à travers le réseau autonomique.

8. Procédé selon la revendication 1 dans lequel l'authentification mutuelle entre le client (40) et le serveur (4) est basée sur la méthode Internet Key Exchange (IKE) lorsque les flux sont sécurisés par les protocoles IPsec, ou sur la méthode d'échange de certificats numériques lorsque les flux sont sécurisés par les protocoles de type Secure Sockets Layer (SSL) ou Transport Layer Security (TLS).

9. Procédé selon la revendication 8 dans lequel le client (40) est un mandataire agissant pour le compte d'un ensemble de Clients.

10. Dispositif d'optimisation du transfert de flux de données sécurisés échangés via un réseau autonomique (30) entre une pluralité d'usagers Pi Producteurs d'informations et une pluralité d'usagers Cj Consommateurs d'informations comportant chacun au moins un client (40) et/ou au moins un serveurs (4) configurés pour négocier des paramètres d'authentification mutuelle et des paramètres de sécurisation des flux échangés entre les usagers Pi Producteurs d'informations et les usagers Cj Consommateurs d'informations, et pour appliquer, suite à cette négociation, un contrôle de l'intégrité des échanges et une protection de la confidentialité selon lesdits paramètres de sécurisation des flux, ledit réseau autonomique (30) comportant au moins un élément central (44) chargé de distribuer des consignes d'optimisation dudit transfert, au moins un module d'observation (46) chargé de mesurer les caractéristiques des flux à optimiser, et au moins un module d'optimisation (48) chargés d'appliquer lesdites consignes d'optimisation en prenant en considération les mesures obtenues par le module d'observation (46),
Dispositif **caractérisé en ce que** ledit module d'optimisation (48) comporte des moyens pour détecter l'initialisation d'une session sécurisée entre le client (40) et le serveur (4), des moyens pour temporiser la négociation entre le client (40) et le serveur (4), des moyens pour établir pendant ladite temporisation un canal de contrôle sécurisé avec un agent autonomique (42) intégré au client (40) pour échanger entre ledit module d'optimisation (48) et ledit agent autonomique (42) des paramètres de sécurité non rémanents, des moyens pour appliquer entre l'agent autonomique (42) et le module d'optimisation (48) une procédure de sécurisation utilisant lesdits paramètres de sécurité non rémanents, de sorte que lors d'un échange de flux entre l'usager Pi Producteur d'informations et l'usager Cj Consommateur d'informations, le module d'optimisation (48) disposant des paramètres de sécurité non rémanents apparaisse comme le client pour le serveur au cours de ladite session.

11. Programme d'ordinateur mémorisé sur un support comportant des instructions pour mettre en oeuvre le procédé selon la revendication 1 lorsqu'il est exécuté par un ordinateur.

## Patentansprüche

1. Verfahren zur Optimierung der Übertragung eines Stroms von gesicherten Daten über ein autonomes Netzwerk (30) zwischen einer Mehrzahl von Benutzern Pi, die Produzenten von Informationen sind, und einer Mehrzahl von Benutzern Cj, die Verbraucher von Informationen sind, die jeweils wenigstens einen Client (40) und/oder wenigstens einen Server (4) umfassen, bei welchem Verfahren das autonome Netzwerk wenigstens ein zentrales Element (44) umfaßt, das dazu ausgelegt ist, Optimierungssollwerte der Übertragung zu verteilen, wenigstens ein Beobachtungsmodul (46), das dazu ausgelegt ist, die Eigenschaften des zu übertragenden Stroms zu messen, sowie wenigstens ein Optimierungsmodul (48), das dazu ausgelegt ist, die Optimierungssollwerte unter Berücksichtigung der Messungen anzuwenden, die von dem Beobachtungsmodul (46) erhalten werden, und bei dem die Clients (40) und die Server (4) dazu ausgelegt sind, Parameter zur wechselseitigen Authentifizierung sowie Parameter zur Sicherung der Ströme auszutauschen, die zwischen den Benutzern Pi als Produzenten von Informationen und den Benutzern Cj als Verbraucher von Informationen ausgetauscht werden, und infolge dieser Verhandlung eine Kontrolle der Integrität der übertragenen Ströme und einen Schutz der Vertraulichkeit gemäß den Sicherungsparametern und gemäß den Authentifizierungsparametern durchzuführen,
wobei das Verfahren **dadurch gekennzeichnet ist, dass** es die folgenden Schritte umfaßt:
für jede gesicherte Session zwischen einem Benutzer Pi als Produzent von Informationen und einem Benutzer Cj als Verbraucher von Informationen:
a) Erfassen, mit Hilfe eines Optimierungsmoduls (48), das geographisch am nächsten bei einem Server (4) gelegen ist, der Initialisierung einer gesicherten Session zwischen einem Client (40) und einem Server (4),
b) Verzögern der Verhandlung zwischen dem Client (40) und dem Server (4) im Bereich des Optimierungsmoduls (48),
c) Herstellen, während der Verzögerung, eines gesicherten Kontrollkanals zwischen dem Optimierungsmodul (48) und einem autonomen Agenten (42), der dem Client (40) zugeordnet ist,
d) Austauschen von nicht-remanenten Sicherheitsparametern zwischen dem Optimierungsmodul (48) und dem autonomen Agenten (42) über den gesicherten Kontrollkanal,
e) Anwenden, zwischen dem autonomen Agenten (42) und dem Optimierungsmodul (48), einer Sicherungsprozedur, die initialisiert wird durch die nicht-remanenten Sicherheitsparameter, derart, dass während eines Austauschs eines Stroms zwischen dem Benutzer Pi als Produzent von Informationen und dem Benutzer Cj als Verbraucher von Informationen das Optimierungsmodul, das über nicht-remanente Sicherheitsparameter verfügt, als der Client für den Server im Verlauf der Session erscheint.

2. Verfahren nach Anspruch 1, bei dem die Übertragung der Sicherungsparameter und der Authentifizierungsparameter, die zwischen dem Client (40) und dem Server (4) verhandelt werden, von dem autonomen Agenten (42) zu dem Optimierungsmodul (48) einer Autorisierung durch ein Koordinationsmodul (50) unterworfen ist, das dazu ausgelegt ist, von dem zentralen Element (44) diktierte Sollwerte anzuwenden, die darauf abzielen, die Übertragung zu autorisieren oder zu verbieten.

3. Verfahren nach Anspruch 1, bei dem die Übertragung der Sicherungsparameter und der Authentifizierungsparameter, die zwischen dem Client (40) und dem Server (4) verhandelt werden, von dem autonomen Agenten (42) zu dem Optimierungsmodul (48) wenigstens einer Regel unterworfen ist, die zuvor durch den Administrator des Clients (40) definiert ist.

4. Verfahren nach Anspruch 3, bei dem die Regel entweder darin besteht, bestimmte spezielle Ströme nicht zu optimieren, oder darin, die gesicherte Session zu sperren, die Gegenstand einer Optimierung in einem Journal ist, oder darin, einen Alarm an den Benutzer des Clients (40) zu melden, der ihm anzeigt, dass die gesicherte Session, die er verwendet, Gegenstand einer Optimierung ist.

5. Verfahren nach Anspruch 2, bei dem das Koordinationsmodul (50) ferner eine Übertragung der Optimierungsfunktionen zwischen zwei getrennten Optimierungsmodulen (48) während einer Änderung der Route der gesicherten Ströme organisiert.

6. Verfahren nach Anspruch 1, bei dem der Client (4) direkt mit dem Kern des autonomen Netzwerks über einen speziellen Steuerkanal kommuniziert.

7. Verfahren nach Anspruch 1, bei dem die Ströme gesicherter Daten, die zwischen einem Benutzer Pi als Produzent von Informationen und einem Benutzer Cj als Verbraucher von Informationen ausgetauscht werden, durch Multimedia-Kommunikationsanwendungen erzeugt werden wie zum Beispiel Telefonie, Visiofonie, Videokonferenz, oder Multimedia-Verteilungsanwendungen wie zum Beispiel Video-auf-Anfrage, Aussendungen, Content-Syndication, oder Konsultationsanwendungen wie zum Beispiel Verzeichnisse, interaktive Dienste oder auch Informationsteilungsanwendungen wie zum Beispiel Peer-to-Peer-Austausch, verteilte Datenbanken, oder Informatikanwendungen, deren Elemente auf entfernten Maschinen ausgeführt werden und synchronisiert werden, um Informationen über das autonome Netzwerk auszutauschen.

8. Verfahren nach Anspruch 1, bei dem die wechselseitige Authentifizierung zwischen dem Client (40) und dem Server (4) auf das Verfahren Internet Key Exchange (IKE) gestützt ist, wenn die Ströme durch die Protokolle IP sec gesichert werden, oder auf das Verfahren des Austauschs digitaler Zertifikate, wenn die Ströme durch die Protokolle vom Typ Secure Sockets Layer (SSL) oder Transport Layer Security (TLS) gesichert werden.

9. Verfahren nach Anspruch 8, bei dem der Client (40) ein Vertreter ist, der auf Rechnung einer Gruppe von Clients handelt.

10. Vorrichtung zur Optimierung der Übertragung eines Stroms von gesicherten Daten, die über ein autonomes Netzwerk (30) zwischen einer Mehrzahl von Benutzern Pi, die Produzenten von Informationen sind, und einer Mehrzahl von Benutzern Cj, die Verbraucher von Informationen sind, ausgetauscht werden, die jeweils wenigstens einen Client (40) und/oder wenigstens einen Server (4) umfassen, die dazu ausgelegt sind, Parameter zur wechselseitigen Authentifizierung sowie Parameter zur Sicherung der Ströme zu verhandeln, die zwischen den Benutzern Pi als Produzenten von Informationen und den Benutzern Cj als Verbraucher von Informationen ausgetauscht werden, und infolge dieser Verhandlung eine Kontrolle der Integrität der Austauschvorgänge sowie einen Schutz der Vertraulichkeit gemäß den Parametern zur Sicherung der Ströme auszuführen, wobei das autonome Netzwerk (30) wenigstens ein zentrales Element (44) umfaßt, das dazu ausgelegt ist, Optimierungssollwerte der Übertragung zu verteilen, wenigstens ein Beobachtungsmodul (46), das dazu ausgelegt ist, die Eigenschaften der zu optimierenden Ströme zu messen, sowie wenigstens ein Optimierungsmodul (48), das dazu ausgelegt ist, die Optimierungssollwerte unter Berücksichtigung der von dem Beobachtungsmodul (46) erhaltenen Messungen anzuwenden,
wobei die Vorrichtung **dadurch gekennzeichnet ist, dass** das Optimierungsmodul (48) Mittel umfaßt zur Erfassung der Initialisierung einer gesicherten Session zwischen dem Client (40) und dem Server (4), Mittel zum Verzögern der Verhandlung zwischen dem Client (40) und dem Server (4), Mittel zur Herstellung eines gesicherten Kontrollkanals mit einem in den Client (40) integrierten autonomen Agenten (42) während der Verzögerung, um zwischen dem Optimierungsmodul (48) und dem autonomen Agenten (42) nicht-remanente Sicherheitsparameter auszutauschen, Mittel zum Anwenden einer Sicherungsprozedur unter Verwendung der nicht-remanenten Sicherheitsparameter zwischen dem autonomen Agenten (42) und dem Optimierungsmodul (48), derart, dass während eines Austauschs eines Stroms zwischen dem Benutzer Pi als Produzent von Informationen und dem Benutzer Cj als Verbraucher von Informationen das Optimierungsmodul (48), das über nicht-remanente Sicherheitsparameter verfügt, als der Client für den Server im Verlauf der Session erscheint.

11. Auf einem Träger gespeichertes Computerprogramm, umfassend Befehle zum Ausführen des Verfahrens nach Anspruch 1, wenn es von einem Computer ausgeführt wird.

## Claims

1. A method for optimising the transfer of streams of secure data via an autonomic network (30) between multiple information-producing users Pi and multiple information-consuming users Cj, where each includes at least one client (40) and/or at least one server (4), a method in which the said autonomic network includes at least one central element (44) responsible for distributing instructions for optimising the said transfer, at least one observation module (46) responsible for measuring the characteristics of the streams to be transferred, and at least one optimisation module (48) responsible for applying the said optimisation instructions, taking into consideration the measurements obtained by the observation module (46), and in which the clients (40) and the servers (4) are configured to exchange mutual authentication settings and security settings of the streams exchanged between the information-producing users Pi and the information-consuming users Cj and, after this negotiation, for checking the integrity of the transferred streams, and implementing protection of confidentiality according to the said security settings and according to the said authentication settings,
a method **characterised in that** it includes the following steps:
for each secure session between an information-producing user Pi user and an information-consuming user Cj:
a) detecting by means of an optimisation module (48) located geographically as close as possible to a server (4) the initialisation of a secure session between a client (40) and a server (4),
b) introducing a wait period during the negotiation between the client (40) and the server (4) within the said optimisation module (48),
c) establishing during said wait period a secure control channel between the said optimisation module (48) and an autonomic agent (42) associated with the client (40),
d) exchanging non-persistent security settings between the said optimisation module (48) and the said autonomic agent (42) via the said secure control channel,
e) applying between the autonomic agent (42) and the optimisation module (48) a security procedure initialised by the said non-persistent security settings, such that during an exchange of streams between the information-producing user Pi and the information-consuming user Cj the optimisation module having non-persistent security settings appears as the client to the server during the said session.

2. A method according to claim 1 in which the transfer of the autonomic agent (42) to the optimisation module (48) of the security settings and of the authentication settings negotiated between the client (40) and the server (4) is subject to an authorisation of a coordination module (50) intended to apply instructions imposed by the central element (44) with the aim of authorising or prohibiting the said transfer.

3. A method according to claim 1 in which the transfer of the autonomic agent (42) to the optimisation module (48) of the security settings and of the authentication settings negotiated between the client (40) and the server (4) is subject to at least one rule previously defined by the administrator of the client (40).

4. A method according to claim 3 in which the said rule consists either in not optimising certain particular streams, or in recording the secure session which is subject to an optimisation in a log, or in notifying an alert to the user of the client (40) informing him that the secure session which he is using has been optimised.

5. A method according to claim 2 in which the said coordination module (50) also organises a transfer of the optimisation functions between two separate optimisation modules (48) when the secure streams change route.

6. A method according to claim 1 in which the client (4) communicates directly with the core of the autonomic network via a dedicated control channel.

7. A method according to claim 1 in which the streams of secure data exchanged between an information-producing user Pi and an information-consuming user Cj are generated by multimedia communication applications, such as telephony, videophony, videoconferencing, or multimedia distribution applications such as video-on-demand, broadcasts, content syndications, or consultation applications such as directories, interactive services, or information-sharing applications such as Peer-to-Peer exchanges, distributed databases, or computer applications the elements of which are executed on remote machines and which are synchronised with one another to exchange data across the autonomic network.

8. A method according to claim 1 in which the mutual authentication between the client (40) and the server (4) is based on the Internet Key Exchange (IKE) method when the streams are secured by the IPsec protocols, or on the method of exchange of digital certificates when the streams are secured by the protocols of the Secure Sockets Layer (SSL) or Transport Layer Security (TLS) types.

9. A method according to claim 8 in which the client (40) is a proxy acting on behalf of a set of Clients.

10. A system for optimising the transfer of streams of secure data exchanged via an autonomic network (30) between multiple information-producing users Pi and multiple information-consuming users Cj, where each includes at least one client (40) and/or at least one server (4) configured to negotiate mutual authentication settings and security settings of the streams exchanged between the information-producing users Pi and the information-consuming users Cj and, after this negotiation, to check the integrity of the exchanges, and to implement protection of the confidentiality according to the said security settings of the streams, where the said autonomic network (30) includes at least one central element (44) responsible for distributing instructions for optimising the said transfer, at least one observation module (46) responsible for measuring the characteristics of the streams to be optimised, and at least one optimisation module (48) responsible for applying the said optimisation instructions, taking into account the measurements obtained by the observation module (46),
A system **characterised in that** the said optimisation module (48) includes means to detect the initialisation of a secure session between the client (40) and the server (4), means to introduce a wait period during the negotiation between the client (40) and the server (4), means to establish, during the said wait period, a secure control channel with an autonomic agent (42) integrated in the client (40) to exchange between the said optimisation module (48) and the said autonomic agent (42) non-persistent security settings, means to apply between the autonomic agent (42) and the optimisation module (48) a security procedure using the said non-persistent security settings, such that, during an exchange of streams between the information-producing user Pi and the information-consuming user Cj, the optimisation module (48) having the non-persistent security settings appears as the client for the server during the said session.

11. A computer program recorded on a recording medium, containing instructions to implement the method according to claim 1 when it is executed by computer.
